(19) Europäisches Patentamt
European Patent Office
Office européen des brevets

(11) **EP 3 974 200 A1**

(12) **EUROPEAN PATENT APPLICATION**
published in accordance with Art. 153(4) EPC

(43) Date of publication:
**30.03.2022 Bulletin 2022/13**

(21) Application number: **20810670.8**

(22) Date of filing: **19.05.2020**

(51) International Patent Classification (IPC):
**B41M 1/06** (2006.01)     **B41M 1/30** (2006.01)
**C09D 11/101** (2014.01)

(52) Cooperative Patent Classification (CPC):
**B41M 1/06; B41M 1/30; C09D 11/101**

(86) International application number:
**PCT/JP2020/019777**

(87) International publication number:
**WO 2020/235556 (26.11.2020 Gazette 2020/48)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **22.05.2019   JP 2019095754**
**18.10.2019   JP 2019190821**
**20.12.2019   JP 2019230233**

(71) Applicant: **Toray Industries, Inc.**
**Tokyo, 103-8666 (JP)**

(72) Inventors:
• **KOSHIMIZU, Noboru**
  **Shiga 520-8558 (JP)**
• **KAWAI, Yurika**
  **Shiga 520-8558 (JP)**
• **INOUE, Takejiro**
  **Shiga 520-8558 (JP)**

(74) Representative: **Kador & Partner PartG mbB**
**Corneliusstraße 15**
**80469 München (DE)**

(54) **ACTINIC-RAY-CURABLE LITHOGRAPHIC PRINTING INK AND METHOD FOR PRODUCING PRINT USING SAME**

(57)     An object of the present invention is to provide an active energy ray-curable lithographic ink that exhibits good adhesion to a plastic film and does not cause a decrease in the adhesion capability even during hot-water treatment. The present invention encompasses an active energy ray-curable lithographic ink containing (a) a polyurethane and (b) a polymerizable monomer.

EP 3 974 200 A1

**Description**

TECHNICAL FIELD

The present invention relates to an active energy ray-curable lithographic ink and a method of producing a printed material using the same.

BACKGROUND ART

Lithography is a printing system widely used as a system capable of inexpensively supplying a large volume of printed material at high speed. In recent years, use of an active energy ray-curable lithographic ink that is instantaneously cured by irradiation with an active energy ray such as a mercury lamp, metal halide lamp, light-emitting diode, or electron ray has been expanding in many fields in view of installations, safety, environment, and high productivity.

In a conventional lithographic method, paper is often used as a substrate, but such a printing method is being extended to plastic films and the like from a viewpoint of diversification of usable substrates. In recent years in particular, a start has been made in the study of applications in which printing is performed onto flexible packages for which a thin plastic film is used as a substrate and which are used for daily goods, foodstuffs, pharmaceuticals, and the like.

An active energy ray-curable lithographic ink can be cured at room temperature in a short time, and thus, is considered to be an optimal material for forming an ink coating on a plastic film lacking in heat resistance. However, in some of the cases where an active energy ray-curable lithographic ink is used for printing on a substrate such as a thin plastic film, the adhesion between the ink and the surface of the plastic film is insufficient. Because of this, progress is being made in the development of an active energy ray-curable lithographic ink having excellent adhesion to a plastic film (see Patent Literature 1).

In addition, a thin plastic film to be used for flexible packages is flexible and easily bent, thus making it desired that the ink coating is flexible as well as being firmly adhered to the surface of the thin film. In one aspect disclosed, a polymerizable urethane acrylate having excellent flexibility is used to enhance the flexibility of an active energy ray-curable lithographic ink (see Patent Literature 2).

Citation List

Patent Literature

Patent Literature 1: JPH03-252472A
Patent Literature 2: WO2015/141552

SUMMARY OF INVENTION

Technical Problem

An active energy ray-curable lithographic ink disclosed in Patent Literature 1 provides enhanced adhesion, but in some of the cases where the ink is printed onto a plastic film, the adhesion between the ink and the plastic film is insufficient, depending on the composition and surface condition of the plastic film.

An active energy ray-curable lithographic ink disclosed in Patent Literatures 2 provides enhanced flexibility, but the adhesion of the ink to a plastic film tends to decrease markedly during heat-treatment such as boiling or retorting that is essential in applications such as food packaging.

In view of this, an object of the present invention is to overcome such problems with conventional technologies, and to provide an active energy ray-curable lithographic ink and a method of producing a printed material using the ink, wherein the ink exhibits good adhesion to a plastic film, and additionally does not decrease in the adhesion capability during hot-water treatment.

Solution to Problem

That is, the present invention encompasses an active energy ray-curable lithographic ink characterized by containing (a) a polyurethane and (b) a polymerizable monomer.

In addition, the present invention encompasses a method of producing a printed material, characterized by using an active energy ray-curable lithographic ink according to the present invention.

Advantageous Effects of Invention

An active energy ray-curable lithographic ink according to the present invention and a method of producing a printed material using the same make it possible to obtain a printed material that exhibits good adhesion to a plastic film, and additionally does not decrease in the adhesion capability during hot-water treatment.

DESCRIPTION OF EMBODIMENTS

Below, the present invention will be specifically described.

An active energy ray-curable lithographic ink according to the present invention contains (a) a polyurethane. (a) the polyurethane included in the present invention is preferably a compound having a urethane bond obtained by allowing a polyol compound to react with an isocyanate compound. Urethane bonds contained in (a) the polyurethane form a hard segment by hydrogen bonding, making it possible to impart tenacity to an ink coating, and in addition, enabling the ink coating to be firmly bonded to the surface of a plastic film or the like to thereby have good adhesion. In addition, the polyol contained in (a) the polyurethane has a flexible structure, and thus, forms a soft segment, making it possible to impart flexibility to the ink coating.

A polyol compound to be used for (a) the polyurethane included in the present invention is not limited to any particular such compound, and is preferably a polyester polyol, polyether polyol, or polycarbonate polyol from a viewpoint of making it possible to enhance the heat resistance and water resistance. These polyols can be used singly or in combination of two or more kinds thereof. Such a polyurethane preferably has an ester bond and a carbonate bond because a polyurethane having a rigid bond leads to inhibiting entanglement of the molecular chains, decreases the viscosity of the ink, enhances the fluidity of the ink, and enables the ink to exhibit good transfer during printing. In particular, a carbonate bond, which is rigid, is preferable.

A polyester polyol can be obtained, for example, by reaction between a polyvalent carboxylic acid compound and a polyhydric alcohol compound. Specific examples of polyvalent carboxylic acid compounds include succinic acid; adipic acid; sebacic acid; azelaic acid; terephthalic acid; isophthalic acid; orthophthalic acid; hexahydroterephthalic acid; hexahydroisophthalic acid; hexahydroorthophthalic acid; and naphthalenedicarboxylic acid; polycarboxylic acids such as trimellitic acid; acid esters thereof; acid anhydrides thereof; and the like. Specific examples of polyhydric alcohol compounds include: low-molecular-weight alcohol compounds such as ethylene glycol, 1,2-propanediol, 1,3-propanediol, 1,2-butanediol, 1,3-butanediol, 1,4-butanediol, 1,5-pentanediol, 1,6-hexanediol, 3-methyl-1,5-pentanediol, neopentyl glycol, 1,8-octanediol, 1,9-nonanediol, diethylene glycol, dipropylene glycol, 1,4-cyclohexanedimethanol, ethylene oxide or propylene oxide adducts of bisphenol A, trimethylolpropane, glycerin, and pentaerythritol; low-molecular-weight aminoalcohol compounds such as monoethanolamine and diethanolamine; and the like. One or more of the above-mentioned polyvalent carboxylic acid compounds and polyhydric alcohol compounds can be used.

Examples of polycarbonate polyols include; such compounds obtained by dehydrochlorination reaction between phosgene and the same polyhydric alcohol compound as used to synthesize the above-mentioned polyester polyol; and compounds obtained by transesterification reaction between the above-mentioned polyhydric alcohol compound and diethylene carbonate, dimethyl carbonate, diethyl carbonate, diphenyl carbonate, or the like.

Examples of polyether polyols include: polyoxyethylene polyol, polyoxypropylene polyol, polytetramethylene ether polyol, and polyoxyethylene polyoxypropylene polyol, which are obtained by ring-opening polymerization of, for example, an alkylene oxide such as ethylene oxide, propylene oxide, or butylene oxide, or tetrahydrofuran, using an initiator that is, for example, the same polyhydric alcohol compound as used to synthesize the polyester polyol. Further examples include polyester ether polyol and polycarbonate ether polyol that are obtained using the above-mentioned polyester polyol and polycarbonate polyol respectively as an initiator.

(a) a polyurethane according to the present invention is preferably water-soluble. Without particular limitation, such a water-soluble polyurethane is obtained by adding a hydrophilic group to a polyurethane by any of various methods. Examples of hydrophilic groups include an ethylene oxide skeleton, carboxyl group, hydroxyl group, amino group, sulfonic group, and the like. The hydrophilic group interacts firmly with the urethane bond in (a) the polyurethane in the ink, and thus, makes it possible to obtain good resistance to hot-water treatment and the like. In addition, such interaction makes it possible to provide good dispersibility to a pigment in the ink, leading to enhancing the fluidity of the ink. The polyurethane preferably has one or more functional groups particularly selected from a carboxyl group, sulfonic group, and hydroxyl group.

Examples of polyol compounds that can be preferably used for (a) the polyurethane having one or more functional groups selected from a carboxyl group, sulfonic group, and hydroxyl group include polyols in which 2,2-dimethylolpropionic acid, 2,2-dimethylolbutanoic acid, 2,2-dimethylolbutyric acid, 2,2-dimethylolvaleric acid, 5-sulfoisophthalic acid, sulfoterephthalic acid, 4-sulfophthalic acid, glycerin, trimethylolpropane, pentaerythritol, or the like has been introduced. These polyol compounds having one or more functional groups selected from a carboxyl group, sulfonic group, and hydroxyl group can be neutralized with at least one selected from organic amines such as ammonia and triethylamine and metallic bases such as Na, K, Li, and Ca, and then be used as raw materials for prepolymers.

Without particular limitation, an isocyanate compound to be used for (a) the polyurethane is preferably a diisocyanate. Among these, a diisocyanate having an aliphatic or alicyclic structure is more preferably used from a viewpoint of making it possible to inhibit yellowing or the like caused by heat. Examples of the diisocyanate having an aliphatic or alicyclic structure include, but are not limited particularly to, toluene diisocyanate, isophorone diisocyanate, hexamethylene diisocyanate, diphenylmethane diisocyanate, naphthalene diisocyanate, dicyclohexyl methane 4,4'-diisocyanate, and the like. Among these, toluene diisocyanate and dicyclohexyl methane 4,4'-diisocyanate can be used particularly preferably. The diisocyanates having an aliphatic or alicyclic structure can be used singly or in combination of two or more kinds thereof.

The urethane bond fraction of (a) the polyurethane is preferably 10 mass% or more, more preferably 15 mass% or more, still more preferably 18 mass% or more, because such a urethane bond fraction makes it possible to achieve firm bonding to the surface of a plastic film or the like to thereby impart good adhesion, and enables the rigid urethane bonding to inhibit entanglement of the molecular chains to decrease the viscosity of the ink. In addition, the fraction is preferably 25 mass% or less, more preferably 23 mass% or less, still more preferably 21 mass% or less, because such a fraction make it possible to enhance compatibility with other ink compositions, make the ink coating flexible, and impart adhesion. In this regard, the presence ratio of the urethane bond in (a) the polyurethane can be obtained by nuclear magnetic resonance (NMR) measurement.

An active energy ray-curable lithographic ink according to the present invention contains (b) a polymerizable monomer. Containing (b) a polymerizable monomer makes it possible to adjust the ink properties desired for lithography, such as viscosity and a leveling property. In addition, irradiation with an active energy ray allows (b) the polymerizable monomer to induce a covalent reaction, and accordingly cures the ink coating, thus making it possible to enhance the resistance to hot-water treatment and the like.

The weight-average molecular weight of (a) the polyurethane is preferably 500 or more, more preferably 1,000 or more, still more preferably 5,000 or more, because such a weight-average molecular weight enhances the hot-water resistance of the ink coating printed with this ink and cured. In addition, the weight-average molecular weight is preferably 1,000,000 or less, more preferably 500,000 or less, still more preferably 30,000 or less, because such a weight-average molecular weight leads to retaining the viscosity of the ink and improving the fluidity. In this regard, the weight-average molecular weight of the resin can be determined by measurement in terms of polystyrene using gel permeation chromatography (GPC).

The amount of (a) the polyurethane is preferably 0.5 mass% or more, more preferably 0.7 mass% or more, still more preferably 0.9 mass% or more, still more preferably 1 mass%, of an ink according to the present invention, because such an amount makes it possible to achieve firm bonding to the surface of a plastic film or the like to thereby impart good adhesion. In addition, the amount is preferably 20 mass% or less, more preferably 5 mass% or less, still more preferably 4 mass% or less, still more preferably 3 mass% or less, because such an amount makes it possible to enhance compatibility with other ink compositions, make the ink coating flexible, and impart adhesion.

An active energy ray-curable lithographic ink according to the present invention contains (b) the polymerizable monomer, and thereby cross-links many of the components among one another, thus making it possible to obtain excellent adhesion and hot-water treatment resistance. The weight-average molecular weight of (b) the polymerizable monomer is preferably 100 or more, more preferably 150 or more, still more preferably 200 or more, because such a weight-average molecular weight makes it possible to make the ink coating flexible and impart adhesion. In addition, the weight-average molecular weight is preferably 1,000 or less, more preferably 700 or less, still more preferably 500 or less, because such a weight-average molecular weight leads to retaining the viscosity of the ink and improving the fluidity. In cases where the chemical structure of (b) the polymerizable monomer is known, the weight-average molecular weight is the molecular weight of the monomer itself. Additionally, in cases where (b) the polymerizable monomer has a molecular weight distribution, the weight-average molecular weight can be obtained by measurement in terms of polystyrene using gel permeation chromatography (GPC).

The amount of (b) the polymerizable monomer contained in an active energy ray-curable lithographic ink according to the present invention is preferably 10 mass% or more because such an amount enhances the curability of the ink coating and enhances the hot-water treatment resistance. The amount is more preferably 15 mass% or more, still more preferably 20 mass% or more. In addition, the amount is preferably 80 mass% or less, more preferably 70 mass% or less, still more preferably 60 mass% or less, because such an amount leads to retaining the viscosity of the ink and exhibiting good anti-scumming.

(b) the polymerizable monomer preferably contains a polyfunctional (meth)acrylate from a viewpoint of cross-linking more components among one another, and preferably contains a polyfunctional (meth)acrylate having a hydrophilic group from a viewpoint of hot-water treatment resistance. In this regard, a "(meth)acrylate" is a generic term that encompasses an acrylate and a methacrylate. Examples of hydrophilic groups include an ethylene oxide skeleton, carboxyl group, hydroxyl group, amino group, sulfonic group, and the like. The hydrophilic group interacts with the urethane bond in (a) the polyurethane in the ink, and thus, makes it possible to obtain good resistance to hot-water treatment and the like. In addition, such interaction makes it possible to provide good dispersibility to a pigment in the ink, leading to enhancing the fluidity of the ink.

The amount of the polyfunctional (meth)acrylate having a hydrophilic group is preferably 10 mass% or more, more preferably 20 mass% or more, still more preferably 30 mass% or more, in an ink according to the present invention because such an amount makes it possible to enhance the hot-water treatment resistance of the ink coating and the fluidity of the ink. In addition, the amount is preferably 80 mass% or less, more preferably 70 mass% or less, still more preferably 60 mass% or less, still more preferably 50 mass% or less, because such an amount makes it possible to inhibit the polar groups from raising the ink viscosity and retain the fluidity of the ink well.

Among the above-mentioned polyfunctional (meth)acrylates having a hydrophilic group, in particular, a polyfunctional (meth)acrylate having a hydroxyl group having high hydrophilicity is preferably contained. The hydroxyl value of the polyfunctional (meth)acrylate containing a hydroxyl group is preferably 50 mgKOH/g or more, more preferably 75 mgKOH/g or more, still more preferably 100 mgKOH/g or more, from a viewpoint of enhancing the hot-water resistance of the ink coating and the fluidity of the ink. In addition, the hydroxyl value is preferably 200 mgKOH/g or less, more preferably 180 mgKOH/g or less, still more preferably 160 mgKOH/g or less, because such a hydroxyl value makes it possible to inhibit the polar groups from raising the ink viscosity and retain the fluidity of the ink well.

Specific examples of the polyfunctional (meth)acrylate having a hydroxyl group include a poly(meth)acrylate of a polyhydric alcohol such as trimethylolpropane, glycerin, pentaerythritol, diglycerine, ditrimethylolpropane, isocyanuric acid, or dipentaerythritol, and alkylene oxide adducts thereof. More specific examples include di(meth)acrylate of trimethylolpropane, di(meth)acrylate of glycerin, di- or tri(meth)acrylate of pentaerythritol, di- or tri(meth)acrylate of diglycerine, di- or tri(meth)acrylate of ditrimethylolpropane, and di-, tri-, tetra-, or penta(meth)acrylate of dipentaerythritol. Further examples include ethylene oxide adducts, propylene oxide adducts, butylene oxide adducts, and tetramethylene oxide adducts of the above-mentioned (meth)acrylates. Among these, pentaerythritol tri(meth)acrylate, diglycerine tri(meth)acrylate, and ditrimethylolpropane tri(meth)acrylate are particularly preferable because these allow an ink according to the present invention to have excellent pigment dispersibility and fluidity.

(b) the polymerizable monomer contained in an active energy ray-curable lithographic ink according to the present invention preferably contains a (meth)acrylate having an alicyclic skeleton or a $C_{6-18}$ aliphatic skeleton. Adding the (meth)acrylate having an alicyclic skeleton or a $C_{6-18}$ aliphatic skeleton results in decreasing the viscosity and surface free energy of the ink, thus enhancing the ink transfer and adhesion to a substrate. Among others, it is preferable to contain a (meth)acrylate having a $C_{6-18}$ aliphatic skeleton, in order to enhance the ink transfer to a substrate.

The (meth)acrylates having an alicyclic skeleton or a $C_{6-18}$ aliphatic skeleton exhibit small volume shrinkage during curing by irradiation with an active energy ray, and enhance the adhesion to the substrate. Thus, it is preferable to have an alicyclic skeleton. The alicyclic skeleton is more preferably a ring-fused skeleton, because a ring-fused skeleton is more rigid, exhibits small volume shrinkage during curing, and yields a cured coating the film properties of which, such as scratch resistance, are good. Examples of the alicyclic skeleton include a norbornane skeleton, adamantane skeleton, tricyclodecane skeleton, dicyclopentadiene skeleton, and the like. A tricyclodecane skeleton is particularly preferable.

If the (meth)acrylate having an alicyclic skeleton or a $C_{6-18}$ aliphatic skeleton is added, the addition amount is preferably 1 mass% or more, more preferably 5 mass% or more, still more preferably 10 mass% or more, in an ink according to the present invention because such an addition amount enhances the ink transfer and adhesion to the substrate. In addition, the amount is preferably 40 mass% or less, more preferably 35 mass% or less, still more preferably 30 mass% or less, because such an amount leads to inhibiting a decrease in the viscosity of the ink and retaining the anti-scumming.

The (meth)acrylate having an alicyclic skeleton or a $C_{6-18}$ aliphatic skeleton leads to achieving good curing sensitivity to an active energy ray, and enhances the strength of the cured film to enhance the adhesion, and thus, it is preferable to have two or more (meth)acrylate-derived structures in the molecule.

The (meth)acrylate having a $C_{6-18}$ aliphatic skeleton preferably has 6 or more carbon atoms, more preferably 8 or more carbon atoms, still more preferably 10 or more carbon atoms, because such a number enhances the ink transfer to the substrate. The number of carbon atoms is preferably 18 or less, more preferably 16 or less, still more preferably 14 or less, because such a number inhibits a decrease in compatibility with the below-mentioned (c) resin having an ethylenically unsaturated group and a hydrophilic group, and with the hydrophilic polyfunctional (meth)acrylate, inhibits a rise in the viscosity of the ink, and inhibits a decrease in ink transfer.

The ratio of the (meth)acrylate having a $C_{6-18}$ aliphatic skeleton with respect to the total amount (1.00 part by mass) of the hydrophilic polyfunctional (meth)acrylate is preferably 0.02 part by mass or more, more preferably 0.04 part by mass or more, still more preferably 0.06 part by mass or more, because such a ratio leads to suitably retaining compatibility with the hydrophilic polyfunctional (meth)acrylate and enhancing the ink transfer. For the same reason, the ratio of the (meth)acrylate having a $C_{6-18}$ aliphatic skeleton with respect to the total amount (1.00 part by mass) of the hydrophilic polyfunctional (meth)acrylate is preferably 0.30 part by mass or less, more preferably 0.20 part by mass or less, still more preferably 0.15 part by mass or less, still more preferably 0.10 part by mass or less.

The ratio of the (meth)acrylate having a $C_{6-18}$ aliphatic skeleton with respect to the total amount (1.00 part by mass) of (c) the resin having an ethylenically unsaturated group and a hydrophilic group is preferably 0.10 part by mass or more, more preferably 0.15 part by mass or more, still more preferably 0.20 part by mass or more, because such a ratio leads to suitably retaining compatibility with the resin having a hydrophilic group, and enhancing the ink transfer. For the same reason, the ratio of the (meth)acrylate having a $C_{6-18}$ aliphatic skeleton with respect to the total amount (1.00 part by mass) of (c) the resin having an ethylenically unsaturated group and a hydrophilic group is preferably 0.60 part by mass or less, more preferably 0.45 part by mass or less, still more preferably 0.30 part by mass or less.

Specific examples of the (meth)acrylate having an alicyclic skeleton or a $C_{6-18}$ aliphatic skeleton include: monofunctional (meth)acrylates having a $C_{6-18}$ aliphatic skeleton, such as hexyl (meth)acrylate, octyl (meth)acrylate, nonyl (meth)acrylate, dodecyl (meth)acrylate, stearyl (meth)acrylate, and isostearyl (meth)acrylate. Examples of (meth)acrylates having an alicyclic skeleton include isobornyl (meth)acrylate, norbornyl (meth)acrylate, norbornane-2-methanol (meth)acrylate, cyclohexyl (meth)acrylate, tricyclopentenyl (meth)acrylate, tricyclopentenyloxy (meth)acrylate, tricyclodecane monomethylol (meth)acrylate, and the like.

Examples of difunctional (meth)acrylates having an alicyclic skeleton or a $C_{6-18}$ aliphatic skeleton include dicyclopentadiene dimethanol di(meth)acrylate, tricyclodecane dimethanol di(meth)acrylate, 1,6-hexanediol di(meth)acrylate, 1,9-nonanediol di(meth)acrylate, 1,7-heptanediol di(meth)acrylate, 1,8-octanediol di(meth)acrylate, 1,10-decanediol di(meth)acrylate, 1,11-undecanediol di(meth)acrylate, 1,12-dodecanediol di(meth)acrylate, 1,13-tridecanediol di(meth)acrylate, 1,14-tetradecanediol di(meth)acrylate, 1,15-pentadecanediol di(meth)acrylate, 1,16-hexadecanediol di(meth)acrylate, 1,17-heptadecanediol di(meth)acrylate, 1,18-octadecanediol di(meth)acrylate, 4-methyl-1,10-decanediol di(meth)acrylate, 4-ethyl-1,10-decanediol di(meth)acrylate, and the like. Other examples include polyester di(meth)acrylates having a $C_{6-18}$ aliphatic skeleton as a repeating unit. It is possible to contain two or more of these. Among these, tricyclodecane dimethanol di(meth)acrylate, which undergoes small volume shrinkage during curing, has a ring-fused skeleton, and is difunctional, is particularly preferable. In addition, 1,10-decanediol di(meth)acrylate is particularly preferable in order to suitably retain compatibility with (c) the resin having an ethylenically unsaturated group and a hydrophilic group and with a hydrophilic polyfunctional (meth)acrylate, and to enhance the ink transfer. Here, the functional number refers to the number of (meth)acrylate-derived structures.

An active energy ray-curable lithographic ink according to the present invention preferably contains (c) a resin having an ethylenically unsaturated group and a hydrophilic group. The ethylenically unsaturated group of the resin reacts with the polymerizable group contained in (b) the polymerizable monomer during irradiation with an active energy ray, and thereby forms a covalent bond between the molecules, thus enhancing the resistance of the ink coating to a hot-water treatment and the like. In addition, the hydrophilic group interacts firmly with the urethane bond, carboxyl group, sulfonic group, and hydroxyl group contained in (a) polyurethane, and thus, markedly enhances the resistance of the ink coating to a hot-water treatment or the like. In addition, the hydrophilic groups in the ink interact among one another, increase the cohesive force of the ink, and thus enhance the repellency of the ink to a non-printing part, resulting in also enhancing the anti-scumming.

Preferable examples of the hydrophilic group of (c) the resin having an ethylenically unsaturated group and a hydrophilic group include a hydroxyl group, amino group, mercapto group, carboxyl group, sulfo group, and phosphate group. Among these, it is particularly preferable to contain a carboxyl group and a hydroxyl group, which well interact with the urethane bond.

The acid value of (c) the resin having an ethylenically unsaturated group and a hydrophilic group is preferably 30 mgKOH/g or more, more preferably 60 mgKOH/g or more, still more preferably 75 mgKOH/g or more, from viewpoints of improving the hot-water treatment resistance of the ink coating and the pigment dispersibility of the ink, and enhancing the anti-scumming (anti-scumming). In addition, the acid value is preferably 250 mgKOH/g or less, more preferably 200 mgKOH/g or less, still more preferably 150 mgKOH/g or less, because such an acid value makes it possible to exhibit solubility in a polyfunctional (meth)acrylate, and inhibiting the polar groups from raising the ink viscosity. In this regard, the acid value of the resin can be determined in accordance with "3.1 neutralization titration" in the test method of JIS K 0070: 1992.

(c) the resin having an ethylenically unsaturated group and a hydrophilic group enhances the sensitivity of an active energy ray-curable lithographic ink according to the present invention to an active energy ray because the ethylenically unsaturated group reacts with a radical species to thereby form a cross-linked structure.

The iodine value of (c) the resin having an ethylenically unsaturated group and a hydrophilic group is preferably 0.5 mol/kg or more, more preferably 1.0 mol/kg or more, still more preferably 1.5 mol/kg or more, which result in achieving good curing sensitivity to an active energy ray. In addition, the iodine value is preferably 3.0 mol/kg or less, more preferably 2.5 mol/kg or less, still more preferably 2.0 mol/kg or less, which result in enhancing the storage stability of the ink. The iodine value of the resin having an ethylenically unsaturated group and a hydrophilic group can be regulated by the amount of the ethylenically unsaturated groups. The iodine value of the resin having an ethylenically unsaturated group and a hydrophilic group can be determined in accordance with the method described in Section 6.0 in the test method of JIS K 0070: 1992.

Examples of the main-chain structure of (c) the resin having an ethylenically unsaturated group and a hydrophilic group include, but are not limited particularly to: acrylic resins, styrene acrylic resins, styrene maleic acid resins, rosin-modified maleic acid resins, rosin-modified acrylic resins, epoxy resins, polyester resins, polyurethane resins, phenol resins, and the like. Among the main-chain structures derived from the above-mentioned resins, the main-chain structures to be preferably used are those derived from acrylic resins, styrene acrylic resins, and styrene maleic acid resins from viewpoints of the availability of the monomer, low cost, easy synthesis, compatibility with other components of the ink, dispersibility of the pigment, and the like.

Examples of the polymer skeleton of (c) the resin having an ethylenically unsaturated group and a hydrophilic group include (meth)acrylic acid copolymers, (meth)acrylic acid-(meth)acrylic acid ester copolymers, styrene-(meth)acrylic acid copolymers, styrene-(meth)acrylic acid-(meth)acrylic acid ester copolymers, styrene-maleic acid copolymers, styrene-maleic acid-(meth)acrylic acid copolymers, styrene-maleic acid-(meth)acrylic acid ester copolymers, and the like.

Among the above-mentioned resins, the resin having an ethylenically unsaturated group and a hydrophilic group and having the same skeleton as a resin selected from acrylic resins, styrene acrylic resins, and styrene maleic acid resins can be produced, for example, by the following method.

A radical polymerization initiator is used to copolymerize a monomer with a monomer that serves as a raw material for an acrylic resin, styrene acrylic resin, or styrene maleic acid resin, wherein the former monomer is selected from the following: carboxyl-group-containing monomers such as (meth)acrylic acids, itaconic acids, crotonic acids, maleic acids, fumaric acids, vinyl acetate, and acid anhydrides thereof; hydroxyl-group-containing monomers such as 2-hydroxyethyl (meth)acrylate; amino-group-containing monomers such as dimethylaminoethyl (meth)acrylate; mercapto-group-containing monomers such as 2-(mercaptoacetoxy)ethyl (meth)acrylate; sulfo-group-containing monomers such as (meth)acrylamide t-butyl sulfonic acid; phosphate-group-containing monomers such as 2-(meth)acryloyloxy ethyl acid phosphate; and the like. In this way, a resin having a hydrophilic group is obtained.

Then, a resin having an ethylenically unsaturated group and a hydrophilic group is obtained by allowing an ethylenically unsaturated compound having a glycidyl group or an isocyanate group, an acrylic acid chloride, a methacrylic acid chloride, or an allyl chloride to undergo addition reaction with a mercapto group, amino group, hydroxyl group, or carboxyl group that is an active hydrogen-containing group in the resin having a hydrophilic group. The method, however, is not limited to this method.

In addition, specific examples of the ethylenically unsaturated compound having a glycidyl group include glycidyl (meth)acrylate, allyl glycidyl ether, glycidyl crotonate, glycidyl isocrotonate, and the like.

In addition, specific examples of the ethylenically unsaturated compound having an isocyanate group include (meth)acryloyl isocyanate, (meth)acryloylethyl isocyanate, and the like.

The weight-average molecular weight of (c) the resin having an ethylenically unsaturated group and a hydrophilic group is preferably 5,000 or more, more preferably 15,000 or more, still more preferably 20,000 or more, because such a weight-average molecular weight enhances the hot-water treatment resistance and anti-scumming of the ink coating. In addition, the weight-average molecular weight is preferably 100,000 or less, more preferably 75,000 or less, still more preferably 50,000 or less, because such a weight-average molecular weight makes it possible to inhibit a rise in the viscosity of the ink. In this regard, the weight-average molecular weight of the resin can be determined by measurement in terms of polystyrene using gel permeation chromatography (GPC).

In cases where (c) the resin having an ethylenically unsaturated group and a hydrophilic group is added to an active energy ray-curable lithographic ink according to the present invention, the resin content is preferably 5 mass% or more and 50 mass% or less. The resin in an amount within the above-mentioned range makes it possible to well retain the resistance of the ink coating to hot-water treatment.

An active energy ray-curable lithographic ink according to the present invention preferably contains a pigment composed of an organic pigment and/or an inorganic pigment. Specific examples of organic pigments include phthalocyanine pigments, soluble azo pigments, insoluble azo pigments, lake pigments, quinacridone pigments, isoindoline pigments, indanthrene pigment, and metal complex pigments. More specific examples include phthalocyanine blue, phthalocyanine green, azo red, monoazo red, monoazo yellow, diazo red, diazo yellow, quinacridone red, quinacridone magenta, isoindoline yellow, and the like.

Examples of inorganic pigments include titanium oxide, zinc oxide, alumina white, calcium carbonate, barium sulfate, iron red, cadmium red, chrome yellow, zinc yellow, Prussian blue, ultramarine, oxide-coated glass powder, oxide-coated mica, oxide-coated metal particles, aluminium powder, gold powder, silver powder, copper powder, zinc powder, stainless steel powder, nickel powder, organic bentonite, iron oxide, carbon black, graphite, and the like.

For use for an ink to be used to print a prime coat color onto a transparent plastic film, preferable examples include white pigments which provide masking properties, such as titanium dioxide, zinc oxide, and alumina white.

The particle diameter of the white pigment is preferably 200 nm or more and 300 nm or less, in which case the transmittance of visible light is most decreased by scattering.

In cases where an organic pigment having a specific gravity of 2 or less or carbon black is used, the concentration of the pigment in an active energy ray-curable lithographic ink according to the present invention is preferably 5 mass% or more, more preferably 10 mass% or more, still more preferably 15 mass% or more, because such a concentration affords a printing density. In addition, the concentration is preferably 50 mass% or less, more preferably 45 mass% or less, still more preferably 40 mass% or less, because such a concentration enhances the ink fluidity to thereby afford good transfer. In cases where an inorganic pigment having a specific gravity of more than 2 is used, the concentration is preferably 20 mass% or more, more preferably 30 mass% or more, still more preferably 40 mass% or more, because such a concentration affords a printing density. In addition, the concentration is preferably 70 mass% or less, more preferably 60 mass% or less, still more preferably 50 mass% or less, because such a concentration enhances the ink fluidity to thereby afford good transfer.

An active energy ray-curable lithographic ink according to the present invention preferably contains an acylphosphine oxide compound. The acylphosphine oxide compound absorbs light in a long-wavelength region of 350 nm or more, and thus, has high sensitivity also in a system containing a pigment that absorbs or reflects ultraviolet light. In addition, such an acylphosphine oxide compound has a photobleaching effect, by which the compound no longer absorbs light once the compound has undergone reaction, and this effect provides excellent internal curability. In addition, the acylphosphine oxide compound generally has a low solubility in a polyfunctional (meth)acrylate, and thus, does not diffuse in ink uniformly. As a result, in some cases, the acylphosphine oxide compound does not exhibit enhanced sensitivity commensurate with the addition amount, and/or precipitates to thereby decrease the fluidity of the ink. On the other hand, the acylphosphine oxide compound exhibits high compatibility with the polyfunctional (meth)acrylate having a hydroxyl group, and thus, diffuses uniformly in a medium, resulting in enhancing the sensitivity to an active energy ray.

Specific examples of the acylphosphine oxide compound include 2,4,6-trimethylbenzoyl-diphenyl-phosphine oxide, 2,6-dimethylbenzoyl-diphenyl-phosphine oxide, 2,6-dimethoxybenzoyl-diphenyl-phosphine oxide, benzoyl-diphenyl-phosphine oxide, 2,4,6-trimethylbenzoyl-bis(4-methoxyphenyl) phosphine oxide, 2,6-dimethylbenzoyl-bis(4-methoxyphenyl) phosphine oxide, 2,6-dimethoxybenzoyl-bis(4-methoxyphenyl) phosphine oxide, 2,4,6-trimethylbenzoyl-4-methoxyphenyl-phenyl-phosphine oxide, 2,6-dimethylbenzoyl-4-methoxyphenyl-phenyl-phosphine oxide, 2,6-dimethoxybenzoyl-4-methoxyphenyl-phenyl-phosphine oxide, 2,4,6-trimethylbenzoyl-dicyclohexyl-phosphine oxide, 2,6-dimethylbenzoyl-dicyclohexyl-phosphine oxide, 2,6-dimethoxybenzoyl-dicyclohexyl-phosphine oxide, benzoyl-bis(2,4,6-trimethylphenyl) phosphine oxide, bis(2,4,6-trimethylbenzoyl)-phenyl-phosphine oxide, bis(2,6-dimethylbenzoyl)-phenyl-phosphine oxide, bis(2,6-dimethoxybenzoyl)-phenyl-phosphine oxide, bis(2,4,6-trimethylbenzoyl)-2,4,4-trimethylpentyl-phosphine oxide, bis(2,6-dimethoxybenzoyl)-2,4,4-trimethylpentyl-phosphine oxide, bis(2,6-dimethylbenzoyl)-2,4,4-trimethylpentyl-phosphine oxide, and the like. Among these, 2,4,6-trimethylbenzoyl-diphenyl-phosphine oxide, bis(2,4,6-trimethylbenzoyl)-phenyl-phosphine oxide, and bis(2,6-dimethoxybenzoyl)-2,4,4-trimethylpentyl-phosphine oxide, which are easily available, are particularly preferable.

An active energy ray-curable lithographic ink according to the present invention contains the above-mentioned acylphosphine oxide compound preferably in an amount of 1 mass% or more, more preferably 3 mass% or more, still more preferably 5 mass% or more, because such an amount enhances the curing sensitivity to light emitted at 350 nm or more. In addition, the amount is preferably 20 mass% or less, more preferably 15 mass% or less, still more preferably 10 mass% or less, because such an amount enhances the storage stability of the ink and leads to retaining the fluidity well.

The active energy ray-curable lithographic ink according to the present invention can contain a sensitizing agent. Specific examples of the sensitizing agent include 2-methylthioxanthone, 2-chlorothioxanthone, 2,4-diethylthioxanthone, isopropylthioxanthone, 2,4-dichlorothioxanthone, 2,3-bis(4-diethylaminobenzal)cyclopentanone, 2,6-bis (4-dimethylaminobenzal)cyclohexanone, 2,6-bis(4-dimethylaminobenzal)-4-methylcyclohexanone, 4,4-bis(dimethylamino)-benzophenone (also known as Michler's ketone), 4,4-bis(diethylamino)-benzophenone, 4,4-bis(dimethylamino)chalcone, 4,4-bis(diethylamino)chalcone, p-dimethylaminocinnamylidene indanone, p-dimethylaminobenzylidene indanone, 2-(p-dimethylaminophenylvinylene)-isonaphthothiazole, 1,3-bis(4-dimethylaminobenzal)acetone, 1,3-carbonyl-bis(4-diethylaminobenzal)acetone, 3,3-carbonyl-bis(7-diethylaminocoumarin), N-phenyl-N-ethylethanolamine, N-phenylethanolamine, N-tolyldiethanolamine, isoamyl dimethylaminobenzoate, isoamyl diethylaminobenzoate, methyl diethylaminobenzoate, ethyl diethylaminobenzoate, isoamyl diethylaminobenzoate, 3-phenyl-5-benzoylthiotetrazole, 1-phenyl-5-ethoxycarbonyl thiotetrazole, and the like.

In cases where a sensitizing agent is added, the active energy ray-curable lithographic ink contains the sensitizing agent in an amount of preferably 0.1 mass% or more of the active energy ray-curable lithographic ink, more preferably 1 mass% or more, still more preferably 3 mass% or more, because such a content enables the active energy ray-curable lithographic ink to obtain good sensitivity. Additionally, from a viewpoint of enhancing the storage stability of the active energy ray-curable lithographic ink, the content is preferably 20 mass% or less of the active energy ray-curable lithographic ink, more preferably 15 mass% or less, still more preferably 10 mass% or less.

An active energy ray-curable lithographic ink according to the present invention preferably contain a polymerization inhibitor. Specific examples of polymerization inhibitors include hydroquinone, monoesterified products of hydroquinone, N-nitrosodiphenylamine, phenothiazine, p-t-butylcatechol, N-phenylnaphthylamine, 2,6-di-t-butyl-p-methyl phenol, chloranil, pyrogallol, and the like. In cases where such a polymerization inhibitor is added, the content is preferably 0.001 mass% or more of the active energy ray-curable lithographic ink from a viewpoint of enabling the active energy ray-curable lithographic ink to obtain good storage stability, and preferably 5 mass% or less from a viewpoint of obtaining good sensitivity.

An active energy ray-curable lithographic ink according to the present invention preferably contains one or more components selected from silicone fluids, alkyl (meth)acrylates, vegetable oils, fatty acid esters from vegetable oils, hydrocarbon solvents, and fluorocarbons. The ink more preferably contains one or more components selected particularly from silicone fluids, alkyl (meth)acrylates, hydrocarbon solvents, and fluorocarbons.

The components have the effect of decreasing the adhesion of the ink to the silicone rubber which is the non-printing part of the waterless lithography plate. Presumably, the adhesion of the ink to the silicone rubber is decreased as follows. That is, the components in the ink diffuse from the ink upon contact of the components in the ink with the silicone rubber surface, and cover the silicone rubber surface in the form of a thin film. It is presumed that the thin film thus formed prevents the adhesion of the ink to the surface of the silicone rubber to prevent the scumming of the silicone surface.

Among the components, the alkyl (meth)acrylate is cured by irradiation with an active energy ray, accordingly enhances sensitivity to the active energy ray simultaneously with enhancement of the water resistance of the ink-cured film, and thus, is preferable. Specific compounds to be used for the components are as below-mentioned.

Examples of silicone fluids include dimethyl silicone, methylphenylsilicone, alkyl-modified silicone, polyether-modified silicone, aralkyl-modified silicone, fatty acid amide-modified silicone, fatty acid ester-modified silicone, fluoroalkyl-modified silicone, methyl hydrogen silicone, silanol-modified silicone, alcohol-modified silicone, amino-modified silicone, epoxy-modified silicone, epoxy polyether-modified silicone, phenol-modified silicone, carboxy-modified silicone, mercapto-modified silicone, and the like.

Examples of alkyl(meth)acrylates include nonyl(meth)acrylate, decyl(meth)acrylate, undecyl(meth)acrylate, dodecyl(meth)acrylate, tridecyl(meth)acrylate, tetradecyl(meth)acrylate, pentadecyl(meth)acrylate, hexadecyl(meth)acrylate, heptadecyl(meth)acrylate, octadecyl(meth)acrylate, isooctadecyl(meth)acrylate, and the like. Such an alkyl(meth)acrylate preferably has an alkyl group having 5 to 24 carbon atoms, more preferably 6 to 21 carbon atoms.

Examples of vegetable oils include soybean oil, linseed oil, safflower oil, tung oil, tall oil, dehydrated castor oil, and the like.

Examples of fatty acid esters from vegetable oils include esters of a fatty acid having an alkyl main chain containing approximately 15 to 20 carbon atoms, such as a stearic acid, isostearic acid, hydroxystearic acid, oleic acid, linoleic acid, linolenic acid, or eleostearic acid with a Ci-io alkyl such as methyl, ethyl, propyl, isopropyl, butyl, isobutyl, tert-butyl, or 2-ethylhexyl.

Examples of hydrocarbon solvents include polyolefin oil, naphthene oil, paraffin oil, and the like.

Examples of fluorocarbons include 1,1,1,2,2-pentafluoroethane, 1,1,1,2,2,3,3,4,4-nonafluorobutane, 1,1,1,2,2,3,3,4,4,5,5,6,6-tridecafluorohexane, 1,1,1,2,2,3,3,4,4,5,5,6,6,7,7,8,8-heptadecafluorooctane, 1,1,1,2,3,3,3-heptafluoropropane, 1,1,1,2,3,3,4,4-octafluoro-2-trifluoromethylbutane, 1,1,1,2,3,3,4,4,5,5,6,6-dodecafluoro-2-trifluoromethyl hexane, 1,1,2,2-tetrafluoroethane, 1,1,2,2,3,3,4,4-octafluorobutane, 1,1,2,2,3,3,4,4,5,5,6,6-dodecafluorohexane, and the like.

An active energy ray-curable lithographic ink according to the present invention preferably contains one or more components selected from the above-mentioned silicone fluids, alkyl (meth)acrylates, vegetable oils, fatty acid esters from vegetable oils, hydrocarbon solvents, and fluorocarbons in an amount of 0.5 mass% or more because such an amount enhances the anti-scumming. The amount is more preferably 1 mass% or more, and still more preferably 2 mass% or more. In addition, the amount is preferably 10 mass% or less, because such an amount makes it possible to enhance the storage stability of the active energy ray-curable lithographic ink. The amount is more preferably 8 mass% or less, still more preferably 5 mass% or less.

An active energy ray-curable lithographic ink according to the present invention preferably contains a pigment dispersant in order to enhance the dispersibility of the pigment. The optimal amount of such a pigment dispersant varies depending on the density, particle diameter, surface area, and the like of the pigment to be used, but the pigment dispersant acts on the surface of the pigment to inhibit the aggregation of the pigment. This enhances the pigment dispersibility to enhance the fluidity of the active energy ray-curable lithographic ink.

Specific examples of the pigment dispersant include "Anti-Terra-U", "Anti-Terra-203/204", "Disperbyk-101, 102, 103, 106, 107, 110, 111, 115, 118, 130, 140, 142, 145, 161, 162, 163, 164, 165, 166, 167, 168, 170, 171, 174, 180, 181, 182, 184, 185, 187, 190, 191, 192, 193, 199, 2000, 2001, 2008, 2009, 2010, 2012, 2013, 2015, 2022, 2025, 2026, 2050, 2055, 2060, 2061, 2070, 2096, 2150, 2151, 2152, 2155, 2163, 2164, 2200, 2205, 9067, 9076", "Bykumen", "BYK-P104, P105", "P104S, 240S", and "Lactimon", which are manufactured by BYK Chemie Japan K.K.

Here, "Bykumen" and "Lactimon" are registered trademarks.

Other examples include: "EFKA 44, 46, 47, 48, 49, 54, 63, 64, 65, 66, 71, 701, 764, 766" and "EFKA POLYMER 100, 150, 400, 401, 402, 403, 450, 451, 452, 453, 745" manufactured by Efka Chemicals B.V.; "FLOWLEN TG-710, "FLOWNON SH-290, SP-1000", and "POLYFLOW No.50E, No.300" manufactured by Kyoeisha Chemical Co., Ltd.; and "DISPARLON 325, KS-860, 873SN, 874, 1401, #2150, #7004" manufactured by Kusumoto Chemicals, Ltd.

Here, "EFKA", "FLOWLEN", "FLOWNON", and "DISPARLON" are registered trademarks.

Further examples include: "DEMOLR N, N, MS, C, S N-B, EP", "HOMOGENOL L-18, "EMULGEN 920, 930, 931, 935, 950, 985", and "ACETAMIN 24, 86" manufactured by Kao Corporation; "SOLSPERSE 5000, 13940, 17000, 24000GR, 32000, 33000, 39000, 41000, 53000" manufactured by Avecia Inc.; "AJISPER PB 821, 822, 824" manufactured by Ajinomoto Fine-Techno Co., Inc.; and the like.

Here, "DEMOL", "HOMOGENOL", "EMULGEN", "ACETAMIN", "SOLSPERSE", and "AJISPER" are registered trademarks.

The amount of the pigment dispersant is preferably 5 mass% or more and 50 mass% or less with respect to the pigment because such an amount enhances the fluidity of the active energy ray-curable lithographic ink.

If desired, an active energy ray-curable lithographic ink according to the present invention can contain an additive such as a wax, antifoaming agent, transfer improving agent, or leveling agent.

The viscosity of an active energy ray-curable lithographic ink according to the present invention is measured at 35°C using a cone-plate rotating viscometer. The viscosity (A) at a rotational speed of 0.5 rpm is preferably 5 Pa·s or more and 100 Pa·s or less.

With the viscosity (A) of 5 Pa·s or more, the ink tends to exhibit a good transfer property between rollers. The viscosity (A) is more preferably 10 Pa·s or more, and still more preferably 20 Pa·s or more. Additionally, with the viscosity (A) of 100 Pa·s or less, the ink has good fluidity, and a white ink in particular exhibits enhanced masking properties. The viscosity (A) is more preferably 80 Pa·s or less, still more preferably 60 Pa·s or less.

The viscosity (B) at a rotational speed of 50 rpm is preferably 10 Pa·s or more and 40 Pa·s or less. The viscosity (B) of 10 Pa·s or more makes it possible to enhance the anti-scumming of the ink. The viscosity (B) is more preferably 15 Pa·s or more, still more preferably 20 Pa·s or more.

With the viscosity (B) of 40 Pa·s or less, the transfer of the ink onto the lithography plate (that is, the ink transfer onto the printing part of a printing plate) is enhanced. The viscosity (B) is more preferably 35 Pa·s or less, still more preferably 30 Pa·s or less. The viscosity ratio (B)/(A), which is the ratio of the viscosity (B) to the viscosity (A), is preferably 0.25 or more and 0.4 or less. The viscosity ratio (B)/(A) is more preferably 0.30 or more and 0.4 or less, still more preferably 0.35 or more and 0.4 or less. The viscosity ratio (B)/(A) within the above-mentioned range enables the ink to have both anti-scumming and fluidity, and using such an ink makes it possible to obtain a printed material that has no scumming, yields a smooth printing part, and thus has high quality.

An active energy ray-curable lithographic ink according to the present invention preferably contains a surfactant. The active energy ray-curable lithographic ink containing a surfactant makes it possible that the ink takes in a suitable amount (generally said to be 10 to 20 mass% of the total amount of the ink) of dampening water during water lithography, and is emulsified, thus increasing the repellency of the non-printing part against the dampening water to thereby enhance the anti-scumming of the ink.

The ratio of the hydrophilic group to the hydrophobic group in the surfactant is represented by an HLB value. The "HLB value" as used herein is a value indicating the degree of the affinity with the water and oil of the surfactant. This HLB value is a value of 0 to 20, and the value near 0 represents a higher oleophilicity while a value near 20 represents a higher hydrophilicity. The HLB value of the surfactant is preferably 8 or more, more preferably 10 or more, from a viewpoint of dissolving water. In addition, the HLB value is preferably 18 or less, more preferably 16 or less, from a viewpoint of dissolving in the active energy ray-curable lithographic ink.

Specific examples of the surfactant include polyoxyethylene alkyl ether, polyoxyethylene lauryl ether, polyoxyethylene oleyl ether, polyoxyethylene stearyl ether, polyoxyethylene cetyl ether, polyoxyethylene palmityl ether, polyoxypropylene alkyl ether, polyoxypropylene lauryl ether, polyoxypropylene oleyl ether, polyoxypropylene stearyl ether, polyoxypropylene cetyl ether, polyoxypropylene palmityl ether, polyoxyalkylene alkyl ether, polyoxyalkylene lauryl ether, polyoxyalkylene oleyl ether, polyoxyalkylene stearyl ether, polyoxyalkylene cetyl ether, and polyoxyalkylene palmitylether; mono-, di-, and trialkyl ether of sorbitan acid, mono-, di-, and trilauryl ether of sorbitan acid, mono-, di-, and trioleyl ether of sorbitan acid, mono-, di-, and tristearyl ether of sorbitan acid, mono-, di-, and tricetyl ether of sorbitan acid, mono-, di-, and tripalmityl ether of sorbitan acid; mono-, di-, and trialkyl ether of polyoxyethylene of sorbitan acid, mono-, di-, and trilauryl ether of polyoxyethylene of sorbitan acid, mono-, di-, and trioleyl ether of polyoxyethylene of sorbitan acid, mono-, di-, and tristearyl ether of polyoxyethylene of sorbitan acid, mono-, di-, and tricetyl ether of polyoxyethylene of sorbitan acid, and mono-, di-, and tripalmityl ether of polyoxyethylene of sorbitan acid; and polyether-modified silicone oil. Surfactants having an HLB value of 8 or more and 18 or less are preferably used.

An active energy ray-curable lithographic ink according to the present invention contains the surfactant preferably in an amount of 0.01 mass% or more, more preferably 0.05 mass% or more, still more preferably 0.1 mass% or more, from a viewpoint of taking in dampening water during water lithography and stabilizing the emulsification state. In addition, the amount is preferably 5 mass% or less, more preferably 3 mass% or less, still more preferably 1 mass% or less, so as not to make it possible that the active energy ray-curable lithographic ink takes in too much dampening water during printing to thereby be dissolved mutually with the dampening water.

Next, a method of producing an active energy ray-curable lithographic ink according to the present invention will be described. An active energy ray-curable lithographic ink according to the present invention is obtained by dissolving (a) a polyurethane, (b) a polymerizable monomer, preferably a pigment, and another component, as required, at 5 to 100°C, and homogeneously mixing and dispersing these components using an agitator or kneading machine such as a kneader, three-roll mill, ball mill, planetary ball mill, beads mill, roll mill, attritor, sand mill, gate mixer, paint shaker, homogenizer, or planetary centrifugal mixer. Optional defoaming under vacuum or reduced pressure after or during the mixing and dispersion is also preferable.

In addition, a method of producing a printed material using an active energy ray-curable lithographic ink according to the present invention is as follows. First, a printed material having an ink coating can be obtained by a step of applying an active energy ray-curable lithographic ink according to the present invention onto a substrate as a substrate by lithography. In addition, the method can include a step of irradiating the ink coating printed on the substrate with an active energy ray.

An active energy ray-curable lithographic ink according to the present invention makes it possible that the ink coating on the printed material is instantly cured by irradiation with an active energy ray. The active energy ray to be used may be any ray as long as such a ray has an excited energy desired for the curing reaction, and preferable examples include ultraviolet light and electron rays. In cases where the coating is cured by using an electron ray, an electron ray apparatus emitting an energy ray of 100 to 500 keV is preferably used. In cases where ultraviolet light is used for curing, an ultraviolet light irradiation device such as a high-pressure mercury lamp, xenon lamp, metal halide lamp, or light-emitting diode (LED) is preferably used. From viewpoints of power saving and cost reduction, it is preferable to use ultraviolet light (LED-UV) the source of which is a light-emitting diode that emits a bright line having a wavelength of 350 to 420 nm.

Examples of substrates include, but are not limited to: art paper, coat paper, cast paper, synthetic paper, newsprint, plastic films, plastic-film-laminated paper, metal, metal-vapor-deposited paper, metal-vapor-deposited plastic films, and the like. Some materials do not absorb ink, and thus do not allow ink to be fixedly adhered to such a substrate, examples of which include: plastic films of polyethylene terephthalate, polyethylene, polyester, polyamide, polyimide, polystyrene, polypropylene, polycarbonate, and polyvinyl acetal; plastic-film-laminated paper having such a plastic film laminated on paper; metals such as aluminium, zinc, and copper; metal-vapor-deposited paper having such metal or metal oxide vapor-deposited on paper; and metal-vapor-deposited plastic films having such metal or metal oxide vapor-deposited on a plastic. Because of this, a lithographic ink according to the present invention, which can be instantly cured and fixedly adhered by irradiation with an active energy ray, is preferably used.

In addition, such a plastic film preferably undergoes a surface treatment such as primer resin coating, corona discharge treatment, or plasma treatment in order to become adhesive.

In a method of producing a printed material using an active energy ray-curable lithographic ink according to the present invention, a substrate the printing side surface of which has a nitrogen element concentration of 0.5 atom% or more and 10.0 atom% or less is preferably used. An intermolecular force such as hydrogen bonding exists between a functional group present in the surface of a substrate and derived from a compound containing a nitrogen atom in an amino group or the like and, in particular, both of the following: the resin having a hydrophilic group and the polyfunctional (meth)acrylate in the ink. Such an intermolecular force makes it possible to enhance the transfer of the ink and the adhesion between the ink and the substrate, and thus, the nitrogen element concentration is preferably 0.5 atom% or more. In addition, the concentration is preferably 10.0 atom% or less because such a concentration prevents yellowing due to irradiation with an active energy ray, long-time exposure to ultraviolet light, or the like.

In the present invention, the nitrogen element concentration of the surface of the substrate is the average nitrogen element concentration of the surface of the substrate, and can be measured by a common composition analysis technique such as X-ray photoelectron spectroscopy (XPS) or Rutherford backscattering spectrometry (RBS). A preferable analysis method is X-ray photoelectron spectroscopy in which the excitation X-ray is a monochromatic A1 K$\alpha$1,2 ray, the X-ray diameter is 200 $\mu$m, and the photoelectron take-off angle, that is, the slope of the detector with respect to the surface of the film is 45° or 60°. The slope of the detector can be suitably selected in accordance with the film thickness of the below-mentioned easy adhesion layer.

In the present invention, the printing side surface of the substrate preferably contains a layer containing at least one compound selected from amines, amides, isocyanates, and urethanes (hereinafter, this layer is referred to as an "easy adhesion layer" in some cases). An intermolecular force such as hydrogen bonding exists between a functional group derived from the easy adhesion layer and, in particular, both of the following: the resin having an acidic group and the polyfunctional (meth)acrylate in the ink. Such an intermolecular force makes it possible to enhance the transfer of the ink and the adhesion between the ink and the substrate. Examples of amines include: ethylenediamine; propylenediamine; hexamethylenediamine; phenylenediamine; tolylenediamine; diphenyldiamine; diaminodiphenylmethane; diaminodiphenylmethane; diaminocyclohexylmethane; ethylenediaminetetraacetic acid; N,N-dialkylaminoalkyl (meth)acrylates such as N,N-dimethylaminoethyl (meth)acrylate, N,N-diethylaminoethyl (meth)acrylate, and N,N-dimethylaminopropyl (meth)acrylate; (meth)acryloyloxyalkyltrialkylammonium salts such as 2-(methacryloyloxy)ethyltrimethylammonium chloride, 2-(methacryloyloxy)ethyltrimethylammonium bromide, and 2-(methacryloyloxy)ethyltrimethylammoniumdimethyl phosphate; (meth)acryloylaminoalkyltrialkylammonium salts such as methacryloylaminopropyltrimethylammonium chloride and methacryloylaminopropyltrimethylammonium bromide; tetraalkyl (meth)acrylates such as tetrabutylammonium (meth)acrylate; trialkylbenzylammonium (meth) acrylate such as trimethylbenzylammonium (meth)acrylate; and the like.

Examples of amides include: aliphatic amides such as ethylenebisstearic acid amide and hexamethylenebisstearic acid amide; N,N-dialkylaminoalkyl (meth)acrylamide such as N,N-dimethylaminoethyl (meth)acrylamide, N,N-diethylaminoethyl (meth)acrylamide, and N,N-dimethylaminopropyl (meth)acrylamide; and the like. Examples of isocyanates include: tolylene diisocyanate, diphenylmethane-4,4'-diisocyanate, metaxylylene diisocyanate, hexamethylene-1,6-diisocyanate, 1,6-diisocyanate hexane, adducts of tolylene diisocyanate and hexanetriol, adducts of tolylene diisocyanate and trimethylolpropane, polyol-modified diphenylmethane-4,4'-diisocyanate, carbodiimide-modified diphenylmethane-4,4'-diisocyanate, isophorone diisocyanate, 1,5-naphthalene diisocyanate, 3,3'-bitolylene-4,4'diisocyanate, 3,3'dimethyldiphenylmethane-4,4'-diisocyanate, metaphenylene diisocyanate, and the like.

Examples of isocyanates include: aromatic diisocyanates such as tolylene diisocyanate and diphenylmethane-4,4-diisocyanate; aromatic aliphatic diisocyanates such as xylylene diisocyanate; alicyclic diisocyanates such as isophorone diisocyanate, 4,4-dicyclohexylmethane diisocyanate, and 1,3-bis(isocyanatemethyl)cyclohexane; aliphatic diisocyanates such as hexamethylene diisocyanate and 2,2,4-trimethylhexamethylene diisocyanate; polyisocyanates obtained by preliminarily adding one or more of these compounds to trimethylolpropane or the like; and the like. These may be used singly or in mixture of two or more kinds thereof. For example, the cases where the surface layer contains an amine compound and an isocyanate compound encompass cases where any one compound in the surface layer contains an amine group and an isocyanate group.

A urethane to be used may be obtained, for example, by polymerizing a polyol and an isocyanate compound by a known method. The constituent components can include at least a polyol and an isocyanate compound, and further include a chain extender, if desired. Examples of polyols include: polyester polyols obtained by reaction between a polyvalent carboxylic acid (for example, a malonic acid, succinic acid, adipic acid, sebacic acid, fumaric acid, maleic acid, terephthalic acid, or isophthalic acid) or an acid anhydride thereof and a polyhydric alcohol (for example, ethylene glycol, diethylene glycol, triethylene glycol, propylene glycol, butanediol, 1,3-butanediol, 1,4-butanediol, 2,3-butanediol, neopentyl glycol, 1,6-hexanediol, or the like); polyether polyols such as polyethylene glycol, polypropylene glycol, polyethylene propylene glycol, polytetramethylene ether glycol, and polyhexamethylene ether glycol; polycarbonate polyols; polyolefin polyols; acrylpolyols; and the like.

Without particular limitation, the amount of an amine, amide, isocyanate, and urethane to be contained in the easy adhesion layer is preferably 0.1 mass% or more and 80 mass% or less, more preferably 1.0 mass% or more and 50 mass% or less, particularly preferably 5 mass% or more and 20 mass% or less, with respect to 100 mass% of the whole easy adhesion layer.

The easy adhesion layer may further contain a resin component. Such a resin component is not limited to any particular resin component provided that the resin component has adhesiveness to the substrate. Such a resin component that can be suitably used is, for example, a polyester, polycarbonate, epoxy resin, alkyd resin, acrylic resin, urea resin, or the like. Such a resin component to be used is preferably a polyester or an acrylic resin, and particularly preferably a polyester having a phthalic acid skeleton. In addition, the above-mentioned urethanes may be those contained as urethane resins. In addition, two or more different resins may be used in combination.

The easy adhesion layer may suitably contain any kind of additive such as a cross-linking agent, plasticizer, heat-resistant stabilizer, weather-resistant stabilizer, organic or inorganic microparticles, waxing agent, antioxidant, weathering agent, antistatic agent, or pigment to the extent that such an additive does impair the film characteristics. Examples of cross-linking agents that can be used include melamine cross-linking agents, aziridine cross-linking agents, epoxy cross-linking agents, methylolated or alkylolated urea cross-linking agents, acrylamide cross-linking agents, polyamide cross-linking agents, oxazoline cross-linking agents, carbodiimide cross-linking agents, isocyanate cross-linking agents, various silane coupling agents, various titanate coupling agents, and the like.

The thickness of the easy adhesion layer can be suitably adjusted in accordance with the optical characteristics and productivity, and is preferably 10 nm or more and 5000 nm or less. The thickness is more preferably 50 nm or more and 3000 nm or less, particularly preferably 100 nm or more and 1000 nm or less. The thickness of 10 nm or more enables uniform coating without causing any defect on the substrate, and makes it possible to provide uniform adhesion. In addition, the thickness of 5000 nm or less makes it possible to decrease an adverse effect on the optical characteristics.

The thickness of the substrate to be used in flexible packaging applications is preferably 5 $\mu$m or more, more preferably 10 $\mu$m or more, from a viewpoint of the mechanical strength of the substrate desired for printing. In addition, the thickness is preferably 50 $\mu$m or less, more preferably 30 $\mu$m or less, which makes the cost of the substrate low.

Examples of methods that can be used for applying an active energy ray-curable lithographic ink according to the present invention to a substrate include known methods such as flexography, offset printing, gravure printing, screen printing, bar coater, and the like. In particular, lithography is preferable. The lithographic method encompasses water lithography and waterless lithography, either of which can be used. The substrate can be used in the form of either a sheet or a roll film. For printing on a thin film for flexible packaging, it is preferable to perform roll-to-roll printing using a roll film.

The thickness of the ink coating (ink-cured film) on a printed material is preferably 0.1 to 50 $\mu$m. The ink coating having a thickness within the above-mentioned range makes it possible to retain the good printing quality, and at the same time, decrease the ink cost.

EXAMPLES

Below, the present invention will be specifically described with reference to Examples. However, the present invention is not limited thereto.

<Raw materials for ink>

Resin: this resin having an ethylenically unsaturated group and a hydrophilic group was obtained by allowing 0.55 equivalent of glycidyl methacrylate to undergo addition reaction with the carboxyl group of a copolymer obtained from 25 mass% of methyl methacrylate, 25 mass% of styrene, and 50 mass% of methacrylic acid. The resin obtained had a weight-average molecular weight of 34,000, an acid value of 105 mgKOH/g, and an iodine value of 2.0 mol/kg.

Polyurethane emulsion 1: UA200 (having a 30 mass% solid content; having a constituent urethane bond fraction of 14.7 mass% with respect to 100 mass% of the polyurethane contained in the polyurethane emulsion 1; manufactured by Sanyo Chemical Industries, Ltd.)

Polyurethane emulsion 2: UWS145 (having a 40 mass% solid content; having a constituent urethane bond fraction of 20.3 mass% with respect to 100 mass% of the polyurethane contained in the polyurethane emulsion 2; manufactured by Sanyo Chemical Industries, Ltd.)

Polycarbonate polyurethane solution 1: 1,6-hexanediol (44 parts by mole), 1,4-cyclohexanedimethanol (23 parts by mole), and dimethyl carbonate (35 parts by mole) were allowed to react to obtain a polycarbonate polyol, which and dicyclohexylmethane 4,4'-diisocyanate (31 parts by mole) were diluted with ethyl acetate so as to have a 30 mass% solid content, and then the resulting solution was allowed to react at 75 to 85°C for four hours to obtain a polycarbonate polyurethane solution 1. An end of the polyurethane was a hydroxyl group, and the urethane bond fraction of the polyurethane was 20.5 mass%.

Polycarbonate polyurethane solution 2: 1,6-hexanediol (44 parts by mole), 1,4-cyclohexanedimethanol (23 parts by mole), and dimethyl carbonate (46 parts by mole) were allowed to react to obtain a polycarbonate polyol, which and dicyclohexylmethane 4,4'-diisocyanate (20 parts by mole) were diluted with ethyl acetate so as to have a 30 mass% solid content, and then the resulting solution was allowed to react at 75 to 85°C for four hours to obtain a polycarbonate polyurethane solution 2. An end of the polyurethane was a hydroxyl group, and the urethane bond fraction of the polyurethane was 15.7 mass%.

Polycarbonate polyurethane solution 3: 1,6-hexanediol (44 parts by mole), 1,4-cyclohexanedimethanol (23 parts by mole), and dimethyl carbonate (50 parts by mole) were allowed to react to obtain a polycarbonate polyol, which and dicyclohexylmethane 4,4'-diisocyanate (16 parts by mole) were diluted with ethyl acetate so as to have a 30 mass% solid content, and then the resulting solution was allowed to react at 75 to 85°C for four hours to obtain a polycarbonate polyurethane solution 3. An end of the polyurethane was a hydroxyl group, and the urethane bond fraction of the polyurethane was 13.7 mass%.

Polycarbonate polyurethane solution 4: 1,6-hexanediol (44 parts by mole), 1,4-cyclohexanedimethanol (23 parts by mole), and dimethyl carbonate (56 parts by mole) were allowed to react to obtain a polycarbonate polyol, which and dicyclohexylmethane 4,4'-diisocyanate (10 parts by mole) were diluted with ethyl acetate so as to have a 30 mass% solid content, and then the resulting solution was allowed to react at 75 to 85°C for four hours to obtain a polycarbonate polyurethane solution 4. An end of the polyurethane was a hydroxyl group, and the urethane bond fraction of the polyurethane was 9.4 mass%.

Polycarbonate polyurethane solution 5: 1,6-hexanediol (44 parts by mole), 1,4-cyclohexanedimethanol (23 parts by mole), and dimethyl carbonate (20 parts by mole) were allowed to react to obtain a polycarbonate polyol, which and dicyclohexylmethane 4,4'-diisocyanate (46 parts by mole) were diluted with ethyl acetate so as to have a 30 mass% solid content, and then the resulting solution was allowed to react at 75 to 85°C for four hours to obtain a polycarbonate polyurethane solution 5. An end of the polyurethane was a hydroxyl group, and the urethane bond fraction of the polyurethane was 25.7 mass%.

Polyester polyurethane solution: 1,4-butanediol (50 parts by mole) and terephthalic acid (25 parts by mole) were allowed to react to obtain a polyester polyol, which and dicyclohexylmethane 4,4'-diisocyanate (24 parts by mole) were diluted with ethyl acetate so as to have a 30 mass% solid content, and the resulting solution was allowed to react at 75 to 85°C for four hours to obtain a polyester polyurethane solution 1. An end of the polyurethane was a hydroxyl group, and the urethane bond fraction of the polyurethane was 20.2 mass%.

Polyether polyurethane solution: polyethylene glycol having a number-average molecular weight of 280 (50 parts by mole) and dicyclohexylmethane 4,4'-diisocyanate (49 parts by mole) were diluted with ethyl acetate so as to have a 30 mass% solid content, and the resulting solution was allowed to react at 75 to 85°C for four hours to obtain a polyether polyurethane solution 1. An end of the polyurethane was a hydroxyl group, and the urethane bond fraction of the polyurethane was 20.3 mass%.

Polymerizable monomer 1: "Miramer" (registered trademark) M340 (manufactured by Miwon Specialty Chemical Co., Ltd.), a mixture of pentaerythritol triacrylate and pentaerythritol tetraacrylate. This monomer had a hydroxyl group and a hydroxyl value of 115 mgKOH/g (the pentaerythritol triacrylate content was calculated at 61 mass%).

Polymerizable monomer 2: tricyclodecane dimethanol diacrylate "Miramer" (registered trademark) M262 (manufactured by Miwon Specialty Chemical Co., Ltd.). This monomer had no hydroxyl group and a hydroxyl value of 0 mgKOH/g.

Polymerizable monomer 3: 1,6-hexanediol diacrylate (LIGHT ACRYLATE 1.6HX-A, manufactured by Kyoeisha Chemical Co., Ltd.). This monomer had no hydroxyl group and a hydroxyl value of 0 mgKOH/g.

Polymerizable monomer 4: 1,10-decanediol diacrylate (NK ester A-DOD-N, manufactured by Shin-Nakamura Chemical Co., Ltd.). This monomer had no hydroxyl group and a hydroxyl value of 0 mgKOH/g.

Pigment 1: Seika cyanine blue 4920 (manufactured by Dainichiseika Color & Chemicals Mfg. Co., Ltd.)

Pigment 2: MICRO ACEP-8 (manufactured by Nippon Talc Co., Ltd.)

Polymerization inhibitor: p-methoxyphenol (manufactured by Wako Pure Chemical Industries, Ltd.)

Wax: polytetrafluoroethylene fine powder "KTL-4N" (registered trademark) (manufactured by Kitamura Limited)

<Measurement of the weight average molecular weight>

The weight-average molecular weight of a resin was a value measured by gel permeation chromatography (GPC) using tetrahydrofuran for the mobile phase. The GPC device was HLC-8220 (manufactured by Tosoh Corporation). The column used was composed of TSKgel SuperHM-H (manufactured by Tosoh Corporation), TSKgel SuperHM-H (manufactured by Tosoh Corporation), and TSKgel SuperH2000 (manufactured by Tosoh Corporation), which were connected in this order. The RI (differential refractive index) detector used for measurement was an RI detector built in the GPC device. A calibration curve was prepared using polystyrene as a standard material, and used to calculate the weight-average molecular weight of a sample. A method of preparing a measurement sample will be described. A sample was diluted with tetrahydrofuran so as to have a concentration of 0.25 mass%. The dilute solution was stirred and dissolved using a mixing rotor (MIX-ROTAR VMR-5, manufactured by As One Corporation) at 100 rpm for five minutes, and filtrated through a 0.2 $\mu$m filter (Z227536-100EA, manufactured by Sigma-Aldrich Co. LLC.). The filtrate was used as a measurement sample. The measurement conditions will be described. In the measurement, the injection volume was 10 $\mu$L, the analysis time was 30 minutes, the flow rate was 0.4 mL/min, and the column temperature was 40°C.

<Measurement of urethane bond fraction of polyurethane>

The urethane bond fraction (mass%) is a value measured by proton magnetic resonance (1H-NMR). The measurement conditions are as follows.
Device: ECZ600R (manufactured by JEOL Ltd.)
Observation frequency: 600 MHz
Temperature: 20°C
Cumulated number of times: 26,214 times
Sample composition: 20 mg of polyurethane/1 mL of N,N-dimethylformamide-d7 (deuterated solvent)/5 mg of 3,5-dinitrobenzoic acid (standard material)

The masses of the polyurethane and standard material in the measurement sample were normalized to a and A (grams) respectively, and the value of integral of the spectrum derived from the C-H of the standard material was normalized to 1. On the basis of this, the value of integral of the spectrum derived from the N-H of the urethane bond was assumed to be b, and the molecular weights of the urethane bond and the standard material were assumed to be 59.0 and 212.1 respectively. The urethane bond fraction (mass%) was determined in accordance with the mathematical formula (1). In this regard, the polyurethane emulsion and the polyurethane solution were dried for removal of water and solvent, thus yielding polyurethane, which was used for the present measurement.

[Math. 1]

$$\text{(Urethane bond fraction)} = \frac{3 \times A \times b \times 59.0}{212.1 \times a} \times 100 \quad \cdot \quad (1)$$

<Evaluation of tack value (viscosity of ink)>

The ink was applied in an amount of 1.3 ml to a roller incometer INKOGRAPH TYPE-V (manufactured by Tester Sangyo Co., Ltd.), which was operated at a roller temperature of 38°C and a rotational speed of 400 rpm. After one minute, the tack value was measured.

A tack value of 20 or more resulted in decreasing the ink transfer, and thus, was rated "poor", 15 or more and less than 20 "good", 10 or more and less than 15 "better", and 10 or less "extremely good".

<Evaluation of adhesion>

Ink was transferred to the adhesive faces of the substrates, which were a polyester film PTM12 (having a thickness of 12 $\mu$m, manufactured by Unitika Ltd.) and a nylon film ONM15 (having a thickness of 15 $\mu$m, manufactured by Unitika Ltd.), using an RI tester (PI-600, manufactured by Tester Sangyo Co., Ltd.) so as to have a coating amount of 1 g/m$^2$ each, and irradiated with an electron ray using an electron ray irradiation device EC250/30/90LS manufactured by Iwasaki Electric Co., Ltd. (at an acceleration voltage of 125 kV and in an irradiation amount of 30 kGy) at a belt conveyor speed of 9 m/minute to obtain a printed material having an ink-cured film. An adhesive TAKELAC A-626/TAKENATE A-65 (mixed at a mass ratio of 16/1, manufactured by Mitsui Chemicals, Inc.) was applied to the ink-cured film using a bar-coat method to make an adjustment in such a manner that the coating amount became 4.0 g/m$^2$ after drying at 80°C for one minute. The adhesive-coated printed material and a sealant were laminated onto each other using a hand roller, and then underwent aging at 40°C for 72 hours to obtain a film laminate composed of a sealant/adhesive/ink-cured film/substrate. In cases where the substrate of the printed material was a polyester film, the sealant used was an unstretched polypropylene film ZK207 (having a thickness of 50 $\mu$m, manufactured by Toray Industries, Inc.). In cases where the substrate was a nylon film, the sealant used was a linear low-density polyethylene LL-XHT50 (having a thickness of 50 $\mu$m, manufactured by Futamura Chemical Co., Ltd.).

Two film laminates (square, 10 cm × 10 cm) that had the same substrate were provided as above-mentioned, and then layered one on the other in such a manner that the respective sealants were in contact with each other. Three of the four ends were processed by sealing using a heat sealer TP-701-B (manufactured by Tester Sangyo Co., Ltd.) at a heater temperature of 180°C and a pressure of 0.1 MPa for 1.0 second to produce a bag with one end opened. Adding 50 ml of pure water into this bag was followed by removing air sufficiently and sealing the remaining one end using the sheet sealer to obtain a pouch formed of a film laminate containing pure water thereinside.

The pouch was placed in a water bath set to 95°C, and underwent hot-water treatment for 30 minutes. After the hot-water treatment, the sealed portions were cut off from the pouch, and the water inside was removed to obtain a hot-water-treated film laminate.

Sections having a width of 15 mm and a length of 50 mm were cut out of the film laminate before and after the hot-water treatment. A TENSILON universal material testing instrument (model number "RTG-1210", manufactured by A&D Company, Limited) was used to measure a peel strength between the substrate and the sealant in accordance with the 90° T-peel Test method (JIS K 6854-3). The value at the first maximum point was regarded as a laminate peel strength.

The testing environment had an atmospheric temperature of 25°C and a humidity of 50%, and the testing speed was 300 mm/minute.

The main failure mode in each of Examples and Comparative Examples was interfacial peeling between the substrate film and the ink. With a peel strength of less than 1.5 N/15 mm, the adhesion was insufficient and rated "poor"; with 1.5 N/15 mm or more and less than 2.0 N/15 mm, the adhesion was "good"; with 2.0 N/15 mm or more and less than 2.5 N/15 mm, the adhesion was "better"; and with 2.5 N/15 mm or more or with the failure mode resulting in film substrate failure, the adhesion was "extremely good".

<Evaluation of ink transfer>

A waterless lithography plate (TAC-VG5, manufactured by Toray Industries, Inc.) was attached onto a web rotary offset press (CI-8, manufactured by Comexi Group Industries S.A.U.), wherein, in the waterless lithography plate, a strip-shaped solid image 400 mm in length (in the printing direction) × 900 mm in width (across the printing direction) was provided in the center of a printing plate 854 mm in length (in the printing direction) × 1,070 mm in width (across the printing direction). The ink mentioned in each of Examples and Comparative Examples was used to perform printing 1,000 m on a polyester film PTM12 (having a thickness of 12 μm, manufactured by Unitika Ltd.) at a printing speed of 200 m/minute and in an ink supply amount of 50%. Using a reflection densitometer (SpectroEye, status E, manufactured by GretagMacbeth GmbH), the reflection density of the solid portion was evaluated with high-quality paper regarded as paper white (a reference having a reflection density of 0). A higher reflection density of the solid portion represents better transfer.

[Examples 1 to 7 and Comparative Example 1]

The resin, polyurethane emulsion or polyurethane solution, polymerizable monomer 1, polymerizable monomer 2, and polymerization inhibitor that are listed in Table 1 were weighed. In this regard, the amount of the polyurethane emulsion or polyurethane solution in Table 1 includes the amount of water or solvent. This water or solvent evaporates or volatilizes in a step of obtaining varnish as below-mentioned, and thus, does not affect the amount of the polyurethane or the like in the composition of the ink.

The raw materials weighed were dissolved under heating at a temperature of 95°C with stirring at 500 rpm using a dispersion blade for 390 minutes, and the water and solvent contained in the polyurethane emulsion or polyurethane solution were removed to obtain a varnish. The pigment 1, pigment 2, and wax were weighed as per the composition mentioned in Table 1 and added to the varnish. The resulting mixture was passed three times through a three-roll mill "EXAKT" (Registered Trademark) M-80S (manufactured by Exakt Technologies, Inc.) with the device set to "Gap 1", whereby an active energy ray-curable lithographic ink was obtained.

The resulting active energy ray-curable lithographic ink was used to produce film laminates before and after hot-water treatment as above-mentioned, and the film laminates were evaluated for adhesion.

In Examples 2 and 3, the urethane bond fraction was 18 mass% or more and 21 mass% or less. The tack of the ink was 12.1, "better", in Example 2, and 7.3, "extremely good", in Example 3 in which the polyurethane had a carbonate bond. In both of Examples 2 and 3, the laminate peel strength of the polyester film was "extremely good" before hot-water treatment, and "good" after hot-water treatment, and the laminate peel strength of the nylon film was "extremely good" both before and after hot-water treatment.

In Example 4 in which the urethane bond fraction was 15 mass% or more and less than 18 mass%, and in which the polyurethane had a carbonate bond, the tack of the ink was 9.8, "extremely good". The laminate peel strength of the polyester film was "extremely good" before hot-water treatment, and "good" after hot-water treatment. The laminate peel strength of the nylon film was "better" before hot-water treatment, and "extremely good" after hot-water treatment.

In Examples 1 and 5, the urethane bond fraction was 10 mass% or more and less than 15 mass%. The tack of the ink was 18.6, "good", in Example 1, and 12.9, "good", in Example 5 in which the polyurethane had a carbonate bond. The laminate peel strength of the polyester film was "extremely good" before hot-water treatment, and "good" after hot-water treatment, and the laminate peel strength of the nylon film was "good" before hot-water treatment, and "better" after hot-water treatment.

In Example 6 in which the urethane bond fraction was less than 10 mass%, and in which the polyurethane had a carbonate bond, the tack of the ink was 17.9, "good". The laminate peel strength of the polyester film was "extremely good" before hot-water treatment, and "good" after hot-water treatment. The laminate peel strength of the nylon film was "good" both before and after hot-water treatment.

In Example 7 in which the urethane bond fraction was more than 25 mass%, and in which the polyurethane had a carbonate bond, the tack of the ink was 5.2, "extremely good". The laminate peel strength of the polyester film was "extremely good" before hot-water treatment, and "good" after hot-water treatment. The laminate peel strength of the nylon film was "good" both before and after hot-water treatment.

In Comparative Example 1 in which the ink had no polyurethane, the tack of the ink was 8.4, "extremely good". The laminate peel strength of the polyester film was "extremely good" before hot-water treatment, but "poor" after hot-water treatment. The laminate peel strength of the nylon film was "poor" both before and after hot-water treatment.

[Table 1]

| | | Example 1 | Example 2 | Example 3 | Example 4 | Example 5 | Example 6 | Example 7 | Comparative Example 1 |
|---|---|---|---|---|---|---|---|---|---|
| Composition (parts by mass) | Resin | 10.4 | 5.9 | 10.0 | 10.0 | 10.0 | 10.0 | 10.0 | 11.7 |
| | Polyurethane Emulsion 1 | 2.3 | - | - | - | - | - | - | - |
| | Polyurethane Emulsion 2 | - | 10.5 | - | - | - | - | - | - |
| | Polycarbonate Polyurethane Solution 1 | - | - | 3.5 | - | - | - | - | - |
| | Polycarbonate Polyurethane Solution 2 | - | - | - | 3.5 | - | - | - | - |
| | Polycarbonate Polyurethane Solution 3 | - | - | - | - | 3.5 | - | - | - |
| | Polycarbonate Polyurethane Solution 4 | - | - | - | - | - | 3.5 | - | - |
| | Polycarbonate Polyurethane Solution 5 | - | - | - | - | - | - | 3.5 | - |
| | Polymerizable Monomer 1 | 42.4 | 42.9 | 42.4 | 42.4 | 42.4 | 42.4 | 42.4 | 42.1 |
| | Polymerizable Monomer 2 | 24.4 | 24.9 | 24.4 | 24.4 | 24.4 | 24.4 | 24.4 | 24.1 |
| | Pigment 1 | 18.0 | 18.0 | 18.0 | 18.0 | 18.0 | 18.0 | 18.0 | 18.0 |
| | Pigment 2 | 3.5 | 3.5 | 3.5 | 3.5 | 3.5 | 3.5 | 3.5 | 3.5 |
| | Polymerization Inhibitor | 0.1 | 0.1 | 0.1 | 0.1 | 0.1 | 0.1 | 0.1 | 0.1 |
| | Wax | 0.5 | 0.5 | 0.5 | 0.5 | 0.5 | 0.5 | 0.5 | 0.5 |
| Urethane Bond Fraction of Polyurethane [mass%] | | 14.7 | 20.3 | 20.5 | 15.7 | 13.7 | 9.4 | 25.7 | 0.0 |
| Tack Value (Viscosity of Ink) | | 18.6 | 12.1 | 7.3 | 9.8 | 12.9 | 17.9 | 5.2 | 8.4 |

| | | | Example 1 | Example 2 | Example 3 | Example 4 | Example 5 | Example 6 | Example 7 | Comparative Example 1 |
|---|---|---|---|---|---|---|---|---|---|---|
| Laminate Peel Strength [N/ 15 mm] | PET | Before Hot-water Treatment | 3.0 | 3.0 | 3.0 | 3.0 | 3.0 | 2.8 | 2.9 | 2.7 |
| | | After Hot-water Treatment | 1.5 | 1.5 | 1.7 | 1.6 | 1.5 | 1.5 | 1.5 | 0.9 |
| | Nylon | Before Hot-water Treatment | 1.9 | 2.6 | 3.0 | 2.3 | 1.8 | 1.6 | 1.8 | 1.3 |
| | | After Hot-water Treatment | 2.2 | 2.6 | 3.0 | 2.5 | 2.1 | 1.7 | 1.9 | 1.4 |

[Examples 3, 8, and 9]

The same operation and evaluation of adhesion as in Example 1 were performed except that the ink composition was changed as in Table 2.

In all of these Examples, the urethane bond fraction was 18 mass% or more and 21 mass% or less, the laminate peel strength of the polyester film was "extremely good" before hot-water treatment, and "good" after hot-water treatment, and the laminate peel strength of the nylon film was "extremely good" both before and after hot-water treatment.

In Example 3 in which the polyurethane had a carbonate bond, the tack of the ink was 7.3, "extremely good". On the other hand, in Example 8 in which the polyurethane had an ester bond, the tack of the ink was 10.8, "better". In Example 9 in which the polyurethane had an ether bond, the tack of the ink was 15.1, "good".

[Table 2]

|  |  |  | Example 3 | Example 8 | Example 9 |
|---|---|---|---|---|---|
| Composition (parts by mass) | Resin | | 10.0 | 10.0 | 10.0 |
| | Polycarbonate Polyurethane Solution 1 | | 3.5 | - | - |
| | Polyester Polyurethane Solution | | - | 3.5 | - |
| | Polyether Polyurethane Solution | | - | - | 3.5 |
| | Polymerizable Monomer 1 | | 42.4 | 42.4 | 42.4 |
| | Polymerizable Monomer 2 | | 24.4 | 24.4 | 24.4 |
| | Pigment 1 | | 18.0 | 18.0 | 18.0 |
| | Pigment 2 | | 3.5 | 3.5 | 3.5 |
| | Polymerization Inhibitor | | 0.1 | 0.1 | 0.1 |
| | Wax | | 0.5 | 0.5 | 0.5 |
| Urethane Bond Fraction of Polyurethane [mass%] | | | 20.5 | 20.2 | 20.3 |
| Tack Value (Viscosity of Ink) | | | 7.3 | 10.8 | 15.1 |
| Laminate Peel Strength [N/15 mm] | PET | Before Hot-water Treatment | 3.0 | 3.0 | 3.0 |
| | | After Hot-water Treatment | 1.7 | 1.5 | 1.5 |
| | Nylon | Before Hot-water Treatment | 3.0 | 2.8 | 2.7 |
| | | After Hot-water Treatment | 3.0 | 2.8 | 2.8 |

[Examples 3, 10, and 11]

The same operation and evaluation of adhesion as in Example 1 were performed except that the ink composition was changed as in Table 3.

In Example 3, the polyurethane content was 1.1 mass%, the laminate peel strength of the polyester film was "extremely good" before hot-water treatment, and "good" after hot-water treatment, and the laminate peel strength of the nylon film was "extremely good" both before and after hot-water treatment.

In Examples 10 and 11, the polyurethane content was 0.3 mass% or 6.0 mass%, the laminate peel strength of the polyester film was "extremely good" before hot-water treatment, and "good" after hot-water treatment, and the laminate peel strength of the nylon film was "good" both before and after hot-water treatment.

[Table 3]

| Composition (parts by mass) | | | Example 3 | Example 10 | Example 11 |
|---|---|---|---|---|---|
| | | Resin | 10.0 | 10.0 | 10.0 |
| | | Polycarbonate Polyurethane Solution 1 | 3.5 | 1.0 | 20.0 |
| | | Polymerizable Monomer 1 | 42.4 | 42.8 | 40.0 |
| | | Polymerizable Monomer 2 | 24.4 | 24.8 | 21.9 |
| | | Pigment 1 | 18.0 | 18.0 | 18.0 |
| | | Pigment 2 | 3.5 | 3.5 | 3.5 |
| | | Polymerization Inhibitor | 0.1 | 0.1 | 0.1 |
| | | Wax | 0.5 | 0.5 | 0.5 |
| Urethane Bond Fraction of Polyurethane [mass%] | | | 20.5 | 20.5 | 20.5 |
| Tack Value (Viscosity of Ink) | | | 7.3 | 8.0 | 7.0 |
| Laminate Peel Strength [N/15 mm] | PET | Before Hot-water Treatment | 3.0 | 2.8 | 2.9 |
| | | After Hot-water Treatment | 1.7 | 1.5 | 1.5 |
| | Nylon | Before Hot-water Treatment | 3.0 | 1.5 | 1.7 |
| | | After Hot-water Treatment | 3.0 | 1.6 | 1.9 |

[Examples 3, 12, and 13]

The same operation and evaluation of adhesion as in Example 1 were performed except that the ink composition was changed as in Table 4.

In Example 3 that included no (meth)acrylate having a $C_{6-18}$ aliphatic skeleton, the laminate peel strength of the polyester film was "extremely good" before hot-water treatment, and "good" after hot-water treatment, and the laminate peel strength of the nylon film was "extremely good" both before and after hot-water treatment. The density of the solid portion was 1.40 in the evaluation of the ink transfer.

In Example 12 that included 1,6-hexanediol diacrylate, the laminate peel strength of the polyester film was "extremely good" before hot-water treatment, and "good" after hot-water treatment, and the laminate peel strength of the nylon film was "extremely good" both before and after hot-water treatment. The reflection density of the solid portion was 1.60 in the evaluation of the ink transfer.

In Example 13 that included 1,10-decanediol diacrylate, the laminate peel strength of the polyester film was "extremely good" before hot-water treatment, and "good" after hot-water treatment, and the laminate peel strength of the nylon film was "extremely good" both before and after hot-water treatment. The reflection density of the solid portion was 1.70 in the evaluation of the ink transfer.

[Table 4]

| | | | Example 3 | Example 12 | Example 13 |
|---|---|---|---|---|---|
| Composition (parts by mass) | | Resin | 10.0 | 10.0 | 10.0 |
| | | Polycarbonate Polyurethane Solution 1 | 3.5 | 3.5 | 3.5 |
| | | Polymerizable Monomer 1 | 42.4 | 40.4 | 40.4 |
| | | Polymerizable Monomer 2 | 24.4 | 23.4 | 23.4 |
| | | Polymerizable Monomer 3 | - | 3.0 | - |
| | | Polymerizable Monomer 4 | - | - | 3.0 |
| | | Pigment 1 | 18.0 | 18.0 | 18.0 |
| | | Pigment 2 | 3.5 | 3.5 | 3.5 |
| | | Polymerization Inhibitor | 0.1 | 0.1 | 0.1 |
| | | Wax | 0.5 | 0.5 | 0.5 |
| Urethane Bond Fraction of Polyurethane [mass%] | | | 20.5 | 20.5 | 20.5 |
| Tack Value (Viscosity of Ink) | | | 7.3 | 6.6 | 6.3 |
| Laminate Peel Strength [N/15 mm] | PET | Before Hot-water Treatment | 3.0 | 3.0 | 3.0 |
| | | After Hot-water Treatment | 1.7 | 1.6 | 1.7 |
| | Nylon | Before Hot-water Treatment | 3.0 | 3.0 | 3.0 |
| | | After Hot-water Treatment | 3.0 | 3.0 | 3.0 |
| Ink Transfer | PET | Density of Solid Portion | 1.40 | 1.60 | 1.70 |

**Claims**

1. An active energy ray-curable lithographic ink, comprising (a) a polyurethane and (b) a polymerizable monomer.

2. The active energy ray-curable lithographic ink according to claim 1, wherein said (a) polyurethane is a water-soluble polyurethane.

3. The active energy ray-curable lithographic ink according to claim 1 or 2, wherein said (a) polyurethane has one or more functional groups selected from a carboxyl group, sulfonic group, and hydroxyl group.

4. The active energy ray-curable lithographic ink according to any one of claims 1 to 3, wherein said (a) polyurethane has a urethane bond fraction of 10 mass% or more and 25 mass% or less.

5. The active energy ray-curable lithographic ink according to any one of claims 1 to 4, wherein said (a) polyurethane has a carbonate bond.

6. The active energy ray-curable lithographic ink according to any one of claims 1 to 5, wherein the amount of said (a) polyurethane is 0.5 mass% or more and 5 mass% or less with respect to the amount of the ink.

7. The active energy ray-curable lithographic ink according to any one of claims 1 to 6, wherein said (b) polymerizable monomer contains a hydrophilic polyfunctional (meth)acrylate.

8. The active energy ray-curable lithographic ink according to any one of claims 1 to 7, wherein said (b) polymerizable monomer contains a polyfunctional (meth)acrylate having a hydroxyl group.

9. The active energy ray-curable lithographic ink according to any one of claims 1 to 8, wherein said (b) polymerizable monomer contains a (meth)acrylate having an alicyclic skeleton or a $C_{6-18}$ aliphatic skeleton.

10. The active energy ray-curable lithographic ink according to claim 9, wherein said (meth)acrylate having an alicyclic skeleton or a $C_{6-18}$ aliphatic skeleton has at least a tricyclodecane skeleton.

11. The active energy ray-curable lithographic ink according to any one of claims 1 to 10, further comprising (c) a resin having an ethylenically unsaturated group and a hydrophilic group.

12. The active energy ray-curable lithographic ink according to claim 11, wherein said (c) resin having an ethylenically unsaturated group and a hydrophilic group contains at least one selected from the group consisting of acrylic resins, styrene acrylic resins, and styrene maleic acid resins.

13. A method of producing a printed material using said active energy ray-curable lithographic ink according to any one of claims 1 to 12.

14. A method of producing a printed material, comprising a step of coating a substrate with said active energy ray-curable lithographic ink according to any one of claims 1 to 12, and irradiating the resulting material with an active energy ray.

15. The method of producing a printed material according to claim 14, wherein the substrate comprises at least one selected from plastic films, plastic-film-laminated paper, metals, metal-vapor-deposited paper, and metal-vapor-deposited plastic films.

16. The method of producing a printed material according to claim 15, wherein said active energy ray is an electron ray or LED-UV.

## INTERNATIONAL SEARCH REPORT

| | International application No. |
|---|---|
| | PCT/JP2020/019777 |

**A.    CLASSIFICATION OF SUBJECT MATTER**
B41M 1/06(2006.01)i; B41M 1/30(2006.01)i; C09D 11/101(2014.01)i
FI: C09D11/101; B41M1/30 D; B41M1/06; B41M1/30 B
According to International Patent Classification (IPC) or to both national classification and IPC

**B.    FIELDS SEARCHED**

Minimum documentation searched (classification system followed by classification symbols)
B41M1/06; B41M1/30; C09D11/101

| Documentation searched other than minimum documentation to the extent that such documents are included in the fields searched | |
|---|---|
| Published examined utility model applications of Japan | 1922–1996 |
| Published unexamined utility model applications of Japan | 1971–2020 |
| Registered utility model specifications of Japan | 1996–2020 |
| Published registered utility model applications of Japan | 1994–2020 |

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| X | WO 2006/003811 A1 (MATSUI CHEMICAL CO., LTD.) 12.01.2006 (2006-01-12) claims, paragraphs [0030], [0064]-[0067], [0069], [0071], [0080]-[0087], [0089], examples | 1, 3-4, 6-7, 9-16 |
| A | claims, paragraphs [0030], [0064]-[0067], [0069], [0071], [0080]-[0087], [0089], examples | 2, 5, 8 |
| X | JP 2012-031388 A (FUJIFILM CORPORATION) 16.02.2012 (2012-02-16) claims, paragraphs [0204], [0214], examples | 1, 3, 11-16 |
| A | claims, paragraphs [0204], [0214] | 2, 4-10 |
| X | JP 2005-329983 A (DAINIPPON PRINTING CO., LTD.) 02.12.2005 (2005-12-02) claims, paragraphs [0024], [0028]-[0030], examples | 1, 3, 7-10, 13-16 |
| A | claims, paragraphs [0024], [0028]-[0030], examples | 2, 4-6, 11-12 |
| P, X | JP 2020-023614 A (DIC GRAPHICS CORPORATION) 13.02.2020 (2020-02-13) claims, paragraphs [0063]-[0067], examples | 1, 6, 13-16 |
| P, A | claims, paragraphs [0063]-[0067], examples | 2-5, 7-12 |

☐    Further documents are listed in the continuation of Box C.          ☒    See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 03 August 2020 (03.08.2020) | 11 August 2020 (11.08.2020) |

| Name and mailing address of the ISA/ | Authorized officer |
|---|---|
| Japan Patent Office 3-4-3, Kasumigaseki, Chiyoda-ku, Tokyo 100-8915, Japan | |
| | Telephone No. |

Form PCT/ISA/210 (second sheet) (January 2015)

## INTERNATIONAL SEARCH REPORT
Information on patent family members

International application no.

PCT/JP2020/019777

| Patent Documents referred in the Report | Publication Date | Patent Family | Publication Date |
|---|---|---|---|
| WO 2006/003811 A1 | 12 Jan. 2006 | US 2008/0108760 A1<br>claims, paragraphs<br>[0031], [0065]-<br>[0068], [0070],<br>[0072], [0081]-<br>[0090], examples<br>EP 1762600 A1<br>CA 2572013 A<br>KR 10-2007-0038107 A<br>CN 101001928 A<br>TW 200615344 A | |
| JP 2012-031388 A | 16 Feb. 2012 | EP 2388146 A2<br>claims, paragraphs<br>[0302], [0325],<br>examples<br>CN 102336081 A | |
| JP 2005-329983 A | 02 Dec. 2005 | (Family: none) | |
| JP 2020-023614 A | 13 Feb. 2020 | (Family: none) | |

Form PCT/ISA/210 (patent family annex) (January 2015)

## REFERENCES CITED IN THE DESCRIPTION

**Patent documents cited in the description**

- JP H03252472 A
- WO 2015141552 A